(19) **Europäisches Patentamt / European Patent Office / Office européen des brevets**

(11) **EP 2 526 286 B1**

(12) **FASCICULE DE BREVET EUROPEEN**

(45) Date de publication et mention de la délivrance du brevet:
**04.11.2015 Bulletin 2015/45**

(21) Numéro de dépôt: **11705916.2**

(22) Date de dépôt: **20.01.2011**

(51) Int Cl.:
**F03B 3/18** *(2006.01)*   **F15B 11/22** *(2006.01)*

(86) Numéro de dépôt international:
**PCT/FR2011/050105**

(87) Numéro de publication internationale:
**WO 2011/089361 (28.07.2011 Gazette 2011/30)**

(54) **DISPOSITIF POUR COMMANDER LE MOUVEMENT D'UNE VANNE-FOURREAU DE MACHINE HYDRAULIQUE ET MACHINE HYDRAULIQUE COMPORTANT UN TEL DISPOSITIF**

ANTRIEBSVORRICHTUNG FÜR EINE RINGSCHÜTZE EINER HYDRAULISCHEN MASCHINE UND HYDRAULISCHE MASCHINE MIT EINER SOLCHEN ANTRIEBSVORRICHTUNG

ACTUATING DEVICE FOR A RING GATE OF A HYDRAULIC MACHINE AND HYDRAULIC MACHINE WITH SUCH A DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.01.2010 FR 1050400**

(43) Date de publication de la demande:
**28.11.2012 Bulletin 2012/48**

(73) Titulaire: **ALSTOM Renewable Technologies 38100 Grenoble (FR)**

(72) Inventeurs:
• **PAVILLET, Robert F-38100 Grenoble (FR)**
• **STEINHILBER, Armin F-38640 Claix (FR)**

(74) Mandataire: **Alstom Technology Ltd CHTI Intellectual Property Brown Boveri Strasse 7 5400 Baden (CH)**

(56) Documents cités:
**WO-A1-99/43954     FR-A5- 2 119 290 US-A- 4 434 964**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne un dispositif pour commander le mouvement d'une vanne-fourreau de machine hydraulique. Par ailleurs, la présente invention concerne une machine hydraulique comportant un tel dispositif. La présente invention peut s'appliquer en particulier aux turbines, pompes ou turbines-pompes.

Une machine hydraulique de l'art antérieur comporte une roue à aubes et une vanne-fourreau pour contrôler l'alimentation en eau de la roue à aubes. La vanne-fourreau est mobile entre une position d'ouverture et une position d'obturation d'une canalisation d'alimentation en eau de la roue à aubes. Le mouvement de la vanne-fourreau entre ses positions d'ouverture et d'obturation est commandé par un dispositif de commande électro-hydraulique.

Un dispositif de commande de l'art antérieur comprend des vérins à double action hydraulique comportant chacun une tige et un piston qui sépare deux chambres adaptées pour recevoir un fluide d'actionnement du vérin. Un tel dispositif de commande nécessite aussi des composants mécaniques pour synchroniser les déplacements des pistons de vérins. En particulier, parmi les composants mécaniques associés à chaque vérin, un couple vis-écrou réversible transforme la translation du piston et de la tige en rotation d'un pignon extérieur au vérin. De plus, une chaîne de transmission relie les pignons entre eux de façon à synchroniser leurs rotations et par suite à synchroniser les translations des pistons des différents vérins.

WO99/43954 divulgue un tel dispositif pour commander une vanne-fourreau de turbine hydraulique. Ce dispositif comprend des vérins répartis au-dessus de la vanne-fourreau et associés chacun mécaniquement à un arbre de déplacement de la vanne-fourreau. Les vérins sont contrôlés par un circuit électrique qui pilote le mouvement de la vanne-fourreau.

Cependant, ce dispositif de commande comporte, pour chaque vérin, plusieurs composants mécaniques qui nécessitent des réglages délicats et des interventions de maintenance fastidieuses.

La présente invention vise notamment à remédier à ces inconvénients, en proposant un dispositif de commande fiable et simple à régler.

A cet effet, la présente invention a pour objet un dispositif, pour commander le déplacement d'une vanne-fourreau de machine hydraulique comportant une roue à aubes, la vanne-fourreau définissant un contour fermé et étant mobile entre une position d'ouverture et une position d'obturation d'au moins une canalisation d'alimentation en eau de la roue à aubes, le dispositif comprenant au moins quatre vérins à double action hydraulique, chaque vérin comportant :

- une tige,

- un piston,

- une première chambre et

- une deuxième chambre,

la première chambre et la deuxième chambre étant adaptées pour recevoir un fluide d'actionnement, le piston étant lié à la tige de façon à séparer la première chambre de la deuxième chambre, la première chambre étant située du côté de la tige par rapport au piston et la deuxième chambre étant située du côté opposé à la tige par rapport au piston, les tiges étant adaptées pour être liées à la vanne-fourreau en des emplacements situés sur un périmètre adapté pour coïncider avec le contour de la vanne-fourreau,

Le dispositif comprend en outre au moins deux organes hydrauliques de synchronisation des distances parcourues par des pistons suivant la direction principale de déplacement de la vanne-fourreau, les organes hydrauliques de synchronisation étant reliés aux vérins de façon à former au moins deux groupes distincts de vérins, chaque groupe englobant au moins deux vérins reliés par au moins un organe hydraulique de synchronisation, deux vérins appartenant à deux groupes distincts n'étant pas reliés par un organe hydraulique de synchronisation.

Un dispositif de commande conforme à l'invention permet donc de synchroniser efficacement les vérins.

Selon d'autres caractéristiques avantageuses mais facultatives de l'invention, prises isolément ou selon toute combinaison techniquement admissible :

- les emplacements sont répartis sur le périmètre de sorte que la raideur de la vanne-fourreau contribue à synchroniser les distances que parcourent des pistons appartenant à des groupes distincts, suivant la direction principale de déplacement de la vanne-fourreau ;

- au moins un organe hydraulique de synchronisation comprend un conduit agencé pour connecter en série au moins deux vérins appartenant à un même groupe, à savoir un premier vérin et un deuxième vérin, ledit organe hydraulique de synchronisation étant adapté pour l'écoulement de fluide d'actionnement de la première chambre d'un premier vérin vers la deuxième chambre d'un deuxième vérin, le deuxième vérin étant consécutif au premier vérin dans leur groupe, la superficie de la face du piston délimitant la première chambre du premier vérin étant approximativement égale à la superficie de la face du piston délimitant la deuxième chambre du deuxième vérin ;

- le nombre de vérins est compris entre 5 et 30 ;

- les groupes englobent le même nombre de vérins ;

- le dispositif comporte au moins trois groupes de vérins et chaque groupe englobe deux vérins ;

- deux emplacements consécutifs sur ledit périmètre correspondent à des vérins appartenant à deux groupes distincts ;

- les emplacements sont uniformément répartis sur ledit périmètre, ledit périmètre est en forme de cercle et les emplacements correspondant aux deux vérins d'un groupe sont diamétralement opposés ;

- la première chambre et la deuxième chambre de chaque vérin sont globalement en forme de cylindres à bases circulaires ;

- pour un premier vérin et un deuxième vérin appartenant à un même groupe, la différence entre le carré du diamètre interne du premier vérin et le carré du diamètre interne du deuxième vérin vaut le carré du diamètre de la tige du premier vérin ;

- le dispositif comporte en outre une unité de pilotage et des moyens d'alimentation discrète et/ou d'évacuation discrète en fluide d'actionnement pour chaque vérin, chaque vérin est équipé d'au moins un capteur adapté pour émettre des signaux représentatifs de la position du piston correspondant suivant la direction d'actionnement du vérin, l'unité de pilotage étant agencée pour collecter lesdits signaux et adaptée pour piloter les moyens d'alimentation discrète et/ou d'évacuation discrète en tenant compte des écarts de positions, suivant la direction principale de déplacement de la vanne-fourreau, entre des vérins appartenant à un même groupe ; et

- le dispositif comporte en outre des moyens d'alimentation continue et/ou d'évacuation continue en fluide d'actionnement des vérins et l'unité de pilotage est adaptée pour piloter les moyens d'alimentation continue et/ou d'évacuation continue en tenant compte des écarts de position entre des vérins appartenant à des groupes distincts.

Par ailleurs, la présente invention a pour objet une machine hydraulique, de type turbine, pompe ou turbine-pompe, comportant une roue à aubes et une vanne-fourreau mobile entre une position d'ouverture et une position d'obturation d'au moins une canalisation d'alimentation en eau de la roue à aubes, la machine hydraulique étant caractérisée en ce qu'elle comporte en outre un dispositif tel qu'exposé précédemment.
La présente invention sera bien comprise et ses avantages ressortiront aussi à la lumière de la description qui va suivre, donnée uniquement à titre d'exemple non limitatif et faite en référence aux dessins annexés, dans lesquels :

- la figure 1 est une vue schématique d'un dispositif conforme à un premier mode de réalisation de l'invention ;

- la figure 2 est une coupe d'une machine hydraulique conforme à l'invention comportant le dispositif de la figure 1 ;

- la figure 3 est une vue à plus grande échelle du détail III à la figure 1 ;

- la figure 4 est une section suivant les flèches IV-IV à la figure 3 ;

- la figure 5 est une vue schématique partiellement en perspective d'une partie du dispositif de commande de la figure 1 ;

- la figure 6 est une vue schématique de la vanne-fourreau, dans une phase statique, schématisée à la figure 1 ;

- la figure 7 est une vue analogue à la figure 6 illustrant la vanne-fourreau de la figure 6 dans une phase dynamique ; et

- la figure 8 est une vue analogue à la figure 1 illustrant un dispositif de commande conforme à un deuxième mode de réalisation de l'invention.

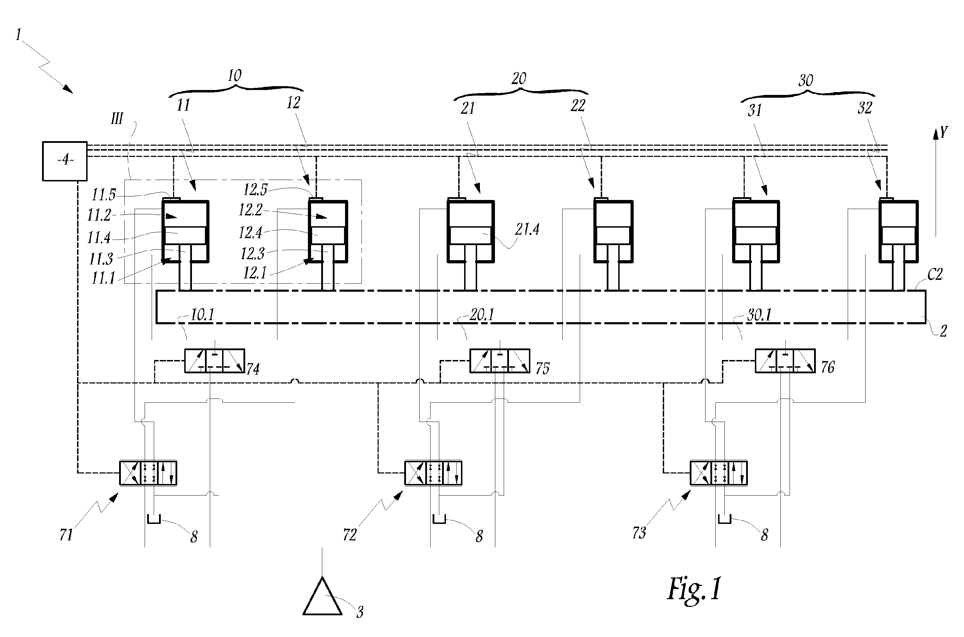

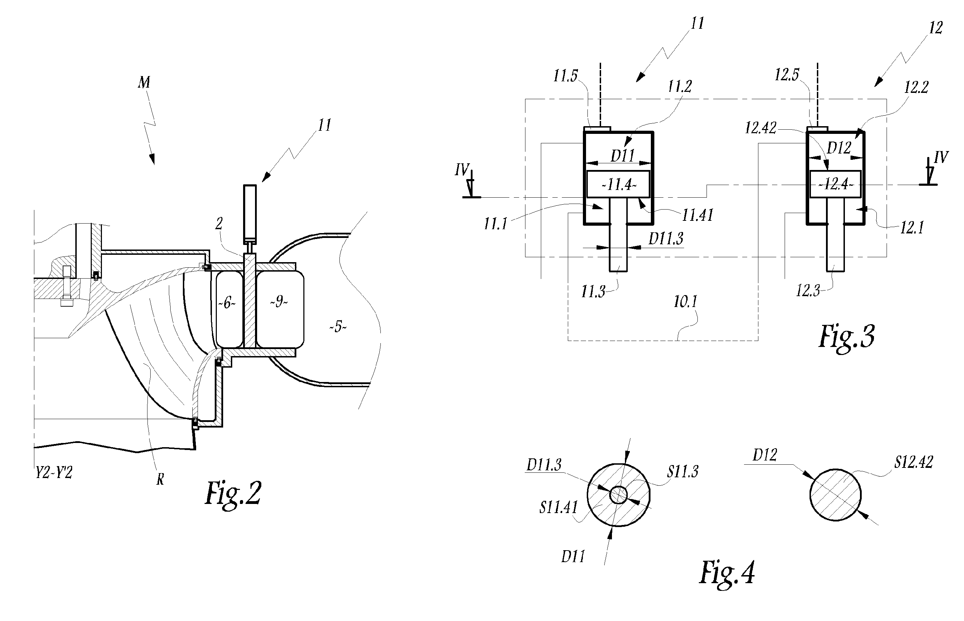

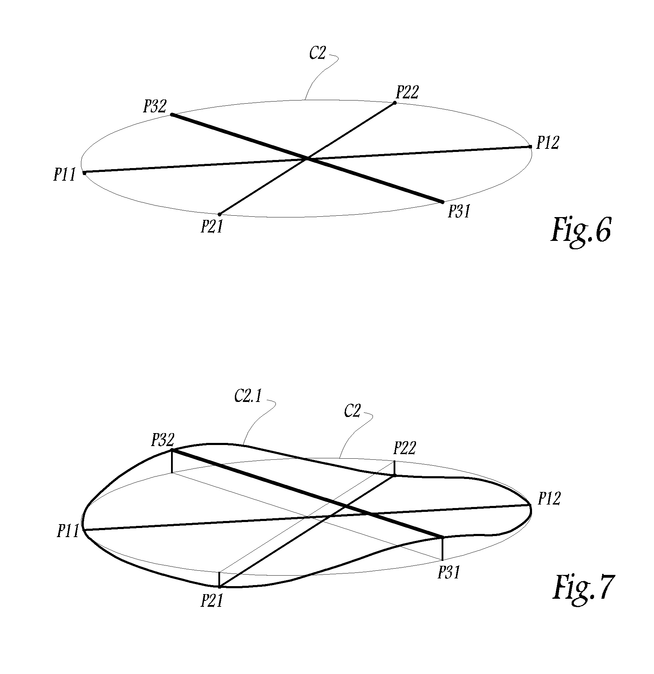

La figure 1 montre un dispositif 1 pour commander le déplacement d'une vanne-fourreau 2. La vanne-fourreau 2 est schématisée en traits mixtes à la figure 1 et représentée en perspective à la figure 6. La vanne-fourreau 2 définit globalement un contour fermé, comme cela est visible à la figure 6. En d'autres termes, la vanne-fourreau 2 a une forme globalement annulaire. Dans l'exemple de la figure 6, la vanne-fourreau 2 a la forme d'un anneau cylindrique à base circulaire et d'axe Y2-Y'2 visible à la figure 2. La vanne-fourreau 2 est schématisée à la figure 1 à la manière d'une développée pour faciliter la lecture de la figure 1.

Comme le montre la figure 2, une machine hydraulique M conforme à l'invention comporte une roue à aubes R, la vanne-fourreau 2 et le dispositif 1. La vanne-fourreau 2 se déplace suivant une direction principale Y, laquelle est verticale et parallèle à l'axe Y2-Y'2 dans l'exemple des figures. La vanne-fourreau 2 est mobile, entre une position d'ouverture et une position d'obturation (figure 2) d'une canalisation 5 d'alimentation en eau de la roue à aubes R. Dans le cas de la machine hydraulique M, qui peut être de type turbine, pompe ou turbine-pompe, la canalisation 5 est formée par une coque dénommée « bâche ». La vanne-fourreau 2 est installée entre des avant-directrices 9 et des directrices 6 mobiles qui servent à diriger le flux d'eau vers la roue à aubes R.

Comme le montrent les figures 1 et 2, le dispositif 1 comprend six vérins 11, 12, 21, 22, 31 et 32 à double action hydraulique, chacun comportant :

- une tige 11.3, 12.3 ou équivalents ;
- un piston 11.4, 12.4 ou équivalents ;
- une première chambre 11.1, 12.1 ou équivalents ; et
- une deuxième chambre 11.2, 12.2 ou équivalents.

Dans la mesure où les vérins 11, 21 et 31, d'une part, et les vérins 12, 22 et 32, d'autre part, sont semblables ou identiques, seuls les vérins 11 et 12 seront décrits en détail ci-après. La description des vérins 11 et 12 donnée ci-après en relation avec les figures peut être transposée aux vérins 21, 22, 31 et 32.

Comme les vérins 11 et 12 sont des vérins à double action hydraulique, leurs premières chambres 11.1 et 12.1 et leurs deuxièmes chambres 11.2 et 12.2 sont adaptées pour recevoir un fluide d'actionnement, tel que de l'huile. Les pistons 11.4 et 12.4 ont des faces globalement planes. Chaque piston 11.4 ou 12.4 est lié à la tige 11.3 ou 12.3 correspondante de façon à séparer la première chambre respective 11.1 ou 12.1 de la deuxième chambre respective 11.2 ou 12.2.

La première chambre 11.1 ou 12.1 et la deuxième chambre 11.2 ou 12.2 de chaque vérin 11 et 12 sont globalement en forme de cylindres à bases circulaires. De même, la tige 11.3 est de forme cylindrique. Chaque première chambre 11.1 ou 12.1 est située, par rapport au piston 11.4 ou 12.4, du côté de la tige 11.3 ou 12.3 correspondante, tandis que chaque deuxième chambre 11.2 ou 12.2 est située, par rapport au piston 11.4 ou 12.4, du côté opposé à la tige 11.3 ou 12.3 correspondante. En d'autres termes, la tige 11.3 ou 12.3 pénètre partiellement dans la première chambre respective 11.1 ou 12.1, tandis que la deuxième chambre 11.2 ou 12.2 ne contient que du fluide d'actionnement.

Les tiges 11.3, 12.3 et équivalents sont adaptées pour être liées à la vanne-fourreau 2 en des emplacements P11, P12, P21, P22, P31 et P32 situés sur un périmètre C2 coïncidant avec le contour de la vanne-fourreau 2. Dans la présente demande, le verbe « lier » se rapporte à une liaison mécanique.

En l'occurrence, une extrémité de chaque tige 11.3 ou 12.3 est directement fixée au contour circulaire de la vanne-fourreau 2. Dans la mesure où le périmètre C2 sur lequel sont situés les emplacements P11, P12, P21, P22, P31 et P32 de liaison entre tiges 11.3, 12.3 et équivalents et vanne-fourreau 2 est adapté pour coïncider avec le contour circulaire de la vanne-fourreau 2, ce périmètre C2 est également circulaire.

Le dispositif 1 comprend trois conduits 10.1, 20.1 et 30.1 qui sont agencés pour connecter en série deux vérins respectifs 11 et 12, 21 et 22 ou 31 et 32. Ainsi, le conduit 10.1 connecte en série les vérins 11 et 12. Le conduit 20.1 connecte en série les vérins 21 et 22. Le conduit 30.1 connecte en série les vérins 31 et 32.

Dans la présente demande, les verbes « raccorder », « relier », « connecter » et « conduire », ainsi que leurs dérivés signifie « mettre en communication hydraulique ». L'adjectif « hydraulique » peut se rapporter à un fluide d'actionnement des vérins, tel que de l'huile, ou à de l'eau s'écoulant dans la machine hydraulique.

Le conduit 10.1 forme un organe hydraulique de synchronisation, car il permet de synchroniser les distances parcourues par les pistons 11.4 et 12.4 suivant la direction Y. La distance maximale que peut parcourir le piston 11.4 suivant la direction Y correspond à la course totale du piston 11.4 dans le vérin 11. A l'instar du conduit 10.1, chaque conduit 20.1 ou 30.1 permet de synchroniser les distances que parcourent les pistons des vérins 21 et 22, d'une part, et 31 et 32, d'autre part, suivant la direction Y. Dans l'exemple des figures, les pistons 11.4, 12.4 et équivalents se déplacent en parallèle et dans le même sens suivant la direction Y.

Les organes hydrauliques de synchronisation que constituent les conduits 10.1, 20.1 et 30.1 sont reliés aux vérins 11, 12, 21, 22, 31 et 32 de façon à former trois groupes 10, 20 et 30 distincts. Chaque groupe 10, 20 ou 30 englobe en l'occurrence deux vérins 11 et 12, 21 et 22 ou 31 et 32. Ainsi, deux vérins 11 et 12, 21 et 22 ou 31 et 32 appartenant à un même groupe 10, 20 ou 30 sont connectés en série par un conduit respectif 10.1, 20.1 ou 30.1. Mais deux vérins 11-21, 12-22 appartenant à deux groupes distincts 10, 20 ne sont pas reliés par un conduit 10.1, 20.1 ou 30.1. Le mode de synchronisation spécifique à l'exemple des figures sera décrit en détail ci-après.

Dans la présente demande, le terme « groupe » désigne un ensemble englobant au moins deux vérins reliés par au moins un organe hydraulique de synchronisation. Les groupes 10, 20 et 30 englobent le même nombre de vérins, à savoir deux chacun. Le dispositif 1 comporte trois groupes 10, 20 et 30 qui englobent chacun deux vérins 11 et 12, 21 et 22, 31 et 32.

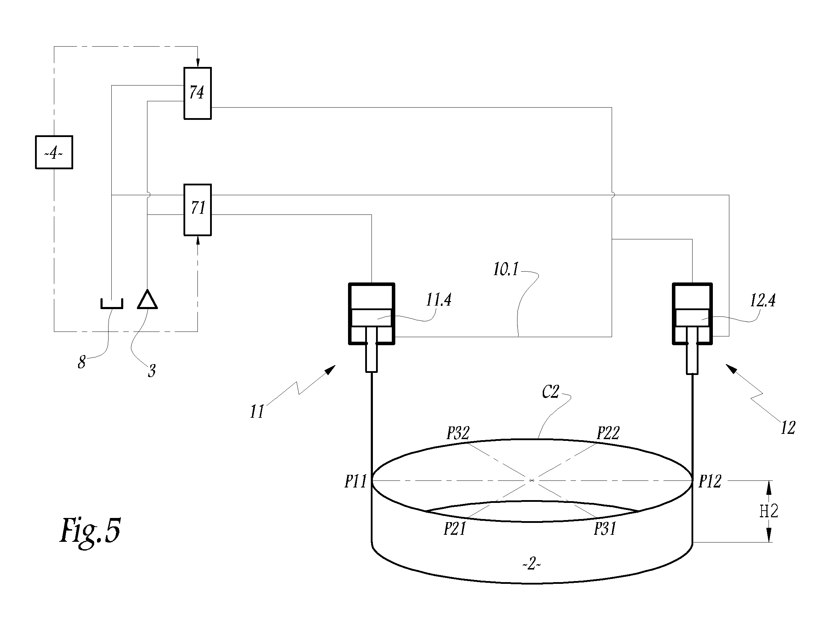

Par ailleurs, comme le montrent les figures 5, 6 et 7, les emplacements P11, P12, P21, P22, P31 et P32 correspondant aux vérins 11, 12, 21, 22, 31 et 32 sont répartis sur le périmètre C2 de sorte que la raideur de la vanne-fourreau 2 contribue à synchroniser les distances que parcourent, suivant la direction Y, des pistons, par exemple 11.4 et 21.4, qui appartiennent à des groupes 10, 20 et 30 distincts.

Sur le périmètre C2, deux emplacements consécutifs correspondent à des vérins appartenant à deux groupes 10, 20 et 30 distincts. Ainsi, les emplacements P11 et P21 correspondent aux vérins 11 et 21 qui appartiennent respectivement au groupe 10 et au groupe 20. Une telle séquence permet d'alterner les emplacements P11, P12, P21, P22, P31 et P32, ce qui contribue à synchroniser les pistons des vérins comme cela est décrit ci-après.

Dans l'exemple des figures 5 à 7, les emplacements P11, P12, P21, P22, P31 et P32 sont uniformément répartis sur le périmètre C2. En d'autres termes, deux emplacements P11 et P21 consécutifs sont séparés par un angle de 60° au centre du périmètre C2 de forme circulaire. De plus, les emplacements correspondants aux deux vérins de chacun des groupes 10, 20 et 30 sont diamétralement opposés sur le périmètre C2. Par exemple, les emplacements P11 et P12 correspondant aux vérins 11 et 12 du groupe 10 sont diamétralement opposés. Une telle répartition des emplacements correspondant aux vérins permet une synchronisation mécanique efficace par la raideur de la vanne-fourreau 2.

Sur la figure 1, les deux vérins de chaque groupe 10, 20 ou 30 sont schématisés en des emplacements adjacents. Cependant, la figure 1 a pour fonction de schématiser des circuits électriques et hydrauliques du dispositif 1, pas de représenter les emplacements réels des vérins ou des composants du dispositif 1 par rapport à la vanne-fourreau 2. Ces emplacements réels sont représentés sur les figures 2 et 5 à 7. Pour la clarté de la figure 5, seuls les vérins 11 et 12 y sont représentés.

La figure 6 symbolise le contour de la vanne-fourreau 2 coïncidant avec le périmètre C2, lorsque les vérins sont dans une phase statique, c'est-à-dire lorsque la vanne-fourreau 2 n'est pas en déplacement car elle est placée en position d'ouverture ou en position d'obturation. La figure 7 symbolise le périmètre C2 lorsque les vérins sont dans une phase dynamique, c'est-à-dire lorsque la vanne-fourreau 2 est en déplacement.

En phase dynamique, le contour supérieur de la vanne-fourreau 2 coïncidant avec le périmètre C2 se déforme, la déformée étant représentée à la figure 7 par un périmètre C2.1. Pour la compréhension de la figure 7, le périmètre C2.1 illustre une déformée du périmètre C2 de manière amplifiée. En effet, en fonction des efforts appliqués sur la vanne-fourreau 2 par les éléments extérieurs, par exemple par les forces hydrauliques et par les forces de frottement, les vérins ne sont pas parfaitement synchronisés, mais présentent au contraire des écarts entre groupes 10, 20 et 30. Ainsi, dans le sens de la montée de la vanne-fourreau 2, les vérins 31 et 32 peuvent être « en avance », tandis que les vérins 21 et 22 peuvent être « en retard » par rapport aux vérins 11 et 12.

Dans la mesure où les emplacements P11, P12, P21, P22, P31 et P32 sont répartis sur le périmètre C2, la raideur de la vanne-fourreau 2 assure une synchronisation mécanique des distances que parcourent des pistons tels que 11.4 et 21.4 appartenant à des groupes 10, 20 et 30 distincts. La raideur de la vanne-fourreau 2 est déterminée par ses dimensions et par l'élasticité du matériau la constituant.

Le diamètre du périmètre C2 correspondant à la vanne-fourreau 2 peut par exemple être compris entre 2 m et 15 m. Le matériau constituant la vanne-fourreau 2 peut par exemple être un acier. La hauteur H2 de la vanne-fourreau 2, mesurée suivant la direction Y, peut être comprise entre 0,25 m et 3 m. L'épaisseur de la vanne-fourreau 2, mesurée suivant une direction radiale orthogonale à la direction Y, peut être comprise entre 30 mm et 300 mm.

En d'autres termes, la raideur de la vanne-fourreau 2 tend à ramener le périmètre C2.1 de la déformée en phase dynamique au voisinage du périmètre C2 coïncidant avec le contour de la vanne-fourreau 2 en phase statique, en s'opposant aux efforts qui ont provoqué la déformation de la vanne-fourreau 2. La raideur de la vanne-fourreau 2 contribue à synchroniser les vérins des groupes 10, 20 et 30 distincts. Dans l'exemple de la figure 7, la raideur de la vanne-fourreau 2 « freine » les vérins en avance 31 et 32 et « accélère » les vérins en retard 21 et 22 au niveau des vérins 11 et 12.

La synchronisation hydraulique entre vérins d'un même groupe est décrite ci-après en relation avec les figures 1 à 4, en particulier entre les vérins 11 et 12. Lorsque la vanne-fourreau 2 se déplace suivant la direction Y et dans le sens de la descente, le fluide d'actionnement circule depuis le premier vérin 11 vers le deuxième vérin 12. Les termes « premier » et « deuxième » sont choisis arbitrairement pour désigner les deux vérins consécutifs d'un même groupe.

Le conduit 10.1, ou organe hydraulique de synchronisation, est adapté pour l'écoulement de fluide d'actionnement entre la première chambre 11.1 du premier vérin 11 et la deuxième chambre 12.2 du deuxième vérin 12. Le deuxième vérin 12 est consécutif au premier vérin 11 dans le groupe 10. En d'autres termes, le conduit 10.1 relie un orifice de refoulement/alimentation de la première chambre 11.1 du premier vérin 11 à un orifice d'alimentation/refoulement de la deuxième chambre 12.2 du deuxième vérin 12.

De plus, comme le montrent les figures 3 et 4, la superficie S11.41 de la face 11.41 du piston 11.4 qui délimite la première chambre 11.1 du premier vérin 11 est approximativement égale à la superficie S12.42 de la face 12.42 du piston 12.4 délimitant la deuxième chambre 12.2 du deuxième vérin 12. Les superficies S11.41 et S12.42 correspondent respectivement aux sections débitantes de la première chambre 11.1 du vérin 11 et de la deuxième chambre 12.2 du vérin 12.

Dans la présente demande, le terme « approximativement » rend compte des tolérances de fabrication des pièces composant les vérins. L'égalité entre les superficies S11.41 et S12.42 est obtenue en dimensionnant les vérins 11 et 12 selon la relation suivante :

$$D11^2 = D12^2 + D11.3^2 \qquad\qquad (\quad 1 \quad)$$

où :

- D11 est le diamètre interne du vérin 11,

- D12 est le diamètre interne du vérin 12 et

- D11.3 est le diamètre de la tige 11.3.

Le diamètre interne D11 du vérin 11 est donc supérieur au diamètre interne D12 du vérin 12.

Plus généralement, pour un premier vérin et un deuxième vérin appartenant à un même groupe, en particulier à un groupe comprenant plus de deux vérins, la différence entre le carré du diamètre interne du premier vérin et le carré du diamètre interne du deuxième vérin vaut le carré du diamètre de la tige du premier vérin.

Comme le montre la figure 4, la face 11.41 a la forme d'une couronne, tandis que la face 12.42 a la forme d'un disque plein. La superficie S11.41 vaut :

$$S11.41 = \pi.(D11)^2 / 4 - \pi. (D11.3)^2 / \quad 4 \qquad\qquad (\quad 2 \quad)$$

De plus, la superficie S12.42 vaut :

$$S12.42 = \pi.(D12)^2 / \quad 4 \qquad\qquad\qquad (\quad 3 \quad)$$

L'égalité entre les superficies S11.41 et S12.42 permet aux pistons 11.4 et 12.4 des vérins 11 et 12 de se déplacer de la même distance lorsqu'un volume de fluide d'actionnement est transféré du vérin 11 au vérin 12 par le conduit 10.1 qui forme un organe hydraulique de synchronisation des pistons 11.4 et 12.4.

Par ailleurs, le dispositif 1 comprend une unité de pilotage 4, trois distributeurs proportionnels 71, 72 et 73, ainsi que trois distributeurs 74, 75 et 76. Chaque distributeur proportionnel 71, 72 ou 73 est relié à un groupe respectif 10, 20 ou 30. Chaque distributeur proportionnel 71, 72 ou 73 présente quatre entrées et trois positions. L'unité de pilotage 4 et les distributeurs proportionnels 71, 72 et 73 permettent de commander les écoulements de fluide d'actionnement entre une source 3 de fluide hydraulique, les vérins 11, 12, 21, 22, 31 et 32 et un collecteur ou drain 8.

En fonctionnement, pour déplacer la vanne-fourreau 2 dans le sens de la descente, l'unité de pilotage 4 pilote les distributeurs proportionnels 71, 72 et 73 de sorte que le fluide d'actionnement s'écoule de la source 3 vers les deuxièmes chambres 11.2 et équivalents des premiers vérins 11, 21 et 31. Concomitamment, le fluide d'actionnement présent dans les premières chambres 11.1 et équivalents des « premiers » vérins 11, 21 et 31 s'écoule dans les conduits 10.1, 20.1 et 30.1 respectivement vers les deuxièmes chambres 12.2 et équivalents des « deuxième » vérins 12, 22 et 32. Les conduits 10.1, 20.1 et 30.1 remplissent ainsi leur fonction d'organes hydrauliques de synchronisation des pistons 11.4, 12.4 et équivalents. Chaque conduit 10.1, 20.1 ou 30.1 synchronise deux pistons 11.4 et 12.4 de vérins appartenant à un même groupe 10, 20 ou 30.

Pour déplacer la vanne-fourreau 2 dans le sens de la montée, l'unité de pilotage 4 pilote les distributeurs proportionnels 71, 72 et 73 de sorte que le fluide d'actionnement s'écoule suivant des directions inverses par rapport à la descente de la vanne-fourreau 2 décrite ci-avant.

Comme le montrent les figures 1 et 5, le dispositif 1 comporte en outre des distributeurs 74, 75 et 76 connectés respectivement à chaque conduit 10.1, 20.1 et 30.1.. Les distributeurs 74, 75 et 76 sont raccordés à la source 3 et au drain 8. Dans chaque groupe 10, 20 ou 30, le distributeur respectif 74, 75 ou 76 remplit la fonction de moyen d'alimentation discrète et/ou d'évacuation discrète pour chaque vérin 11 et 12 et équivalents en fluide d'actionnement.

Dans la présente demande, le terme « discrète » s'applique à l'écoulement, en alimentation ou en évacuation, de faibles volumes de fluide d'actionnement, par opposition à des écoulements « continus » de volume important de fluide d'actionnement. Un moyen d'alimentation « continue » et/ou d'évacuation « continue » en fluide d'actionnement est mis en oeuvre pour déplacer la vanne-fourreau suivant une grande amplitude, typiquement pour passer de la position d'ouverture à la position d'obturation. Un moyen d'alimentation « discrète » et/ou d'évacuation « discrète » en fluide d'actionnement est mis en oeuvre pour déplacer les tiges et pistons de certains vérins suivant une petite amplitude, la vanne-fourreau se déplaçant alors d'une distance insignifiante ou nulle.

Chaque vérin 11, 12, 21, 22, 31 ou 32 est équipé d'un capteur 11.5, 12.5 et équivalent adapté pour émettre des signaux représentatifs de la position des pistons respectifs 11.4, 12.4 et équivalent suivant la direction Y. Comme le montre la figure 1, l'unité de pilotage 4 est raccordée électriquement à chaque capteur 11.5, 12.5 et équivalent, de façon à collecter ces signaux.

L'unité de pilotage 4 est adaptée pour piloter chaque distributeur 74, 75 ou 76, en tenant compte des écarts de position, suivant la direction Y, entre les pistons 11.4 et 12.4 de vérins 11 et 12 appartenant à un même groupe 10, 20 ou 30. En d'autres termes, chaque distributeur 74, 75 ou 76 permet de synchroniser précisément les pistons des vérins appartenant à un même groupe.

L'unité de pilotage 4 est adaptée pour piloter les distributeurs proportionnels 71, 72 et 73 remplissant les fonctions de moyens d'alimentation continue et/ou d'évacuation continue en fluide d'actionnement pour les vérins respectifs 11-12, 21-22 ou 31-32, en tenant compte des écarts de position entre les pistons de vérins appartenant à des groupes distincts tels que 10 et 20, tels les vérins 11 et 21. En d'autres termes, chaque distributeur proportionnel 71, 72 ou 73 permet de synchroniser précisément des pistons de vérins appartenant à des groupes distincts.

Les distributeurs proportionnels 71, 72 et 73 et les distributeurs 74, 75 et 76 permettent d'assurer une très grande précision dans la synchronisation hydraulique des distances que parcourent les pistons 11.4, 12.4 et équivalent des vérins 11, 12, 21, 22, 31 et 32, en complément de la synchronisation hydraulique réalisée par les conduits 10.1, 20.1 et 30.1 et de la synchronisation mécanique réalisée par la raideur de la vanne-fourreau 2.

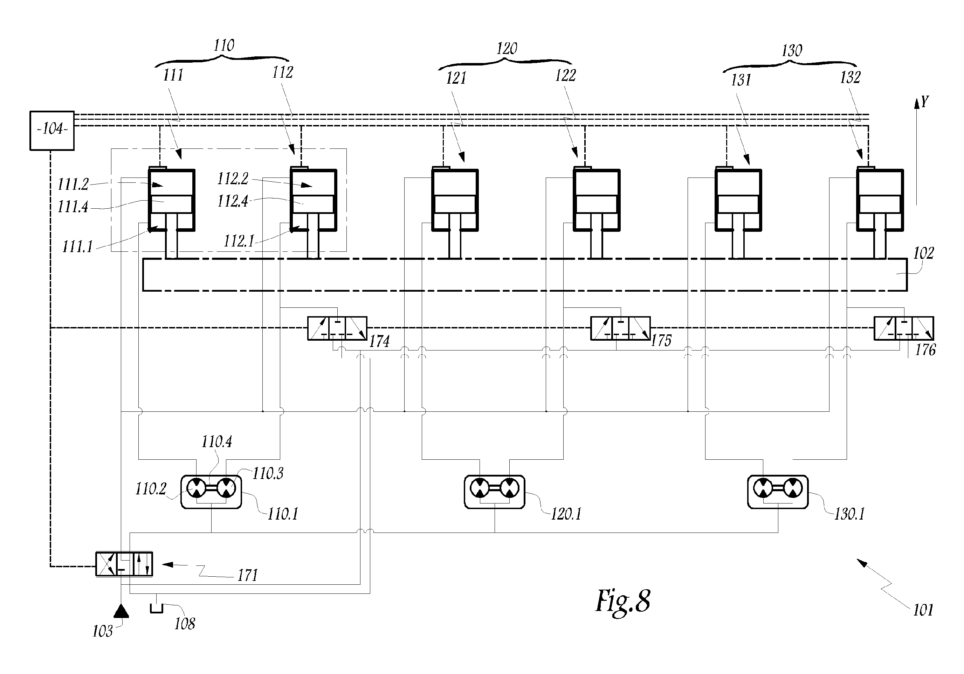

La figure 8 illustre un dispositif 101 conforme à un deuxième mode de réalisation de l'invention. La description du dispositif 1 donnée ci-avant peut être transposée au dispositif 101, à l'exception des différences notables mentionnées ci-après. Un élément du dispositif 101 identique ou correspondant à un élément du dispositif 1 porte la même référence numérique augmentée de 100.

On définit ainsi une vanne-fourreau 102, une source 103 de fluide hydraulique, une unité de pilotage 104, trois groupes 110, 120 et 130 avec des vérins 111, 112, 121, 122, 131 et 132, chaque vérin 111, 112 ou équivalent comprenant un piston 111.4, 112.4 ou équivalent, une première chambre 111.1, 112.1 ou équivalent et une deuxième chambre 111.2, 112.2 ou équivalent.

Le dispositif 101 diffère du dispositif 1, car tous les vérins 111, 112, 121, 122, 131 et 132 ont les mêmes dimensions, en particulier les vérins 111 et 112 d'un même groupe 110.

De plus, le dispositif 101 diffère du dispositif 1, car il ne comporte qu'un seul distributeur proportionnel 171 relié aux vérins des trois groupes 110, 120 et 130, au lieu des trois distributeurs proportionnels 71, 72 et 73 indépendants. Le distributeur proportionnel 171 pilote les écoulements de fluide d'actionnement dans et hors des vérins 111, 112, 121, 122, 131 et 132, de façon semblable aux distributeurs proportionnels 71, 72 et 73.

Le dispositif 101 diffère du dispositif 1, car il comporte des diviseurs de débit 110.1, 120.1 et 130.1 au lieu des conduits 10.1, 20.1 et 30.1. Chaque diviseur de débit 110.1, 120.1 ou 130.1 remplit la fonction d'organe hydraulique de synchronisation des vérins appartenant au groupe correspondant 110, 120 ou 130.

Les diviseurs de débit 110.1, 120.1 et 130.1 sont donc reliés aux vérins 111, 112, 121, 122, 131 et 132 de façon à former trois groupes distincts 110, 120 et 130 de vérins. Chaque groupe 110, 120 ou 130 englobe deux vérins 111-112, 121-122 ou 131-132 qui sont reliés par un diviseur de débit 110.1, 120.1 ou 130.1. Deux vérins, tels que 111-121 ou 112-122 appartenant à deux groupes distincts 110, 120 ne sont pas reliés par un diviseur de débit 110.1, 120.1 ou 130.1.

La description de la structure et le fonctionnement du diviseur de débit 110.1 est détaillée ci-après en relation avec la figure 8. Dans la mesure où les diviseurs de débit 102.1 et 130.1 sont identiques ou semblables au diviseur de débit 110.1, la description du diviseur de débit 110.1 peut être transposée aux diviseurs de débit 102.1 et 130.1.

Le diviseur de débit 110.1 comprend deux moteurs hydrauliques 110.2 et 110.3, ainsi qu'un arbre commun 110.4. Le moteur hydraulique 110.2 est raccordé à la première chambre 111.1 du vérin 111. Le moteur hydraulique 110.3 est raccordé à la première chambre 112.1 du vérin 112.

L'arbre commun 110.4 lie mécaniquement les moteurs hydrauliques 110.2 et 110.3 entre eux, de telle sorte que les moteurs hydrauliques 110.2 et 110.3 ont la même vitesse de rotation autour de l'arbre commun 110.4. Ainsi, le débit de fluide d'actionnement dans le moteur hydraulique 110.2 est égal au débit de fluide d'actionnement dans le moteur hydraulique 110.3. Donc le débit de fluide d'actionnement s'écoulant vers ou depuis la première chambre 111.1 est égal au débit de fluide d'actionnement s'écoulant vers ou depuis la première chambre 112.1. Par conséquent, l'organe hydraulique de synchronisation que forme le diviseur de débit 110.1 synchronise les distances que parcourent les pistons 111.4 et 112.4 suivant la direction Y.

Alternativement à des diviseurs de débit, les organes hydrauliques de synchronisation peuvent être formés par des diviseurs de quantité ou de volume, par exemple par des diviseurs linéaires comprenant chacun un vérin à chambres multiples dont une tige actionne simultanément plusieurs pistons.

Selon une variante de l'invention non représentée, le dispositif de commande de la figure 1 peut comporter un seul distributeur proportionnel qui est commun aux groupes distincts, au lieu de trois distributeurs proportionnels. Inversement, selon une autre variante non représentée, au lieu d'un distributeur proportionnel commun, le dispositif de commande de la figure 8 peut comporter trois distributeurs proportionnels, à raison d'un par groupe.

Selon d'autres variantes de l'invention non représentées :

- les faces des pistons peuvent ne pas être planes, mais par exemple bombés ou gauches ;

- la vanne-fourreau peut présenter une forme annulaire cylindrique à base non circulaire, par exemple à base elliptique, une forme annulaire non cylindrique, par exemple prismatique à base carrée ;

- les tiges ne sont pas directement fixées à la vanne-fourreau, mais lui sont liées par l'intermédiaire d'organes de liaison mécanique respectifs tels que des écrous ;

- la direction principale de déplacement de la vanne-fourreau peut être horizontale, voire oblique, plutôt que verticale ;

- au moins un groupe peut englober trois vérins ou plus ; dans une variante où trois vérins forment un groupe, deux conduits relient ces trois vérins en série ; la différence entre les carrés des diamètres internes de deux vérins consécutifs vaut le carré du diamètre de la tige du vérin ayant le plus gros diamètre ;

- deux groupes distincts peuvent comporter des nombres de vérins différents ;

- au moins un organe hydraulique de synchronisation peut être prévu pour ne relier deux vérins entre eux qu'en cas d'urgence, lorsque la vanne-fourreau doit être fermée rapidement ; en service normal, ces deux vérins ne sont pas reliés par cet organe hydraulique.

Un dispositif conforme à la présente invention assure donc une synchronisation très précise entre ses vérins grâce à leurs synchronisation hydraulique et à leur synchronisation mécanique. Un dispositif conforme à la présente invention est facile à régler et nécessite peu de maintenance. Une machine hydraulique conforme à l'invention est donc fiable.

## Revendications

**1.** Dispositif (1 ; 101), pour commander le déplacement d'une vanne-fourreau (2 ; 102) de machine hydraulique (M) comportant une roue à aubes (R), la vanne-fourreau (2 ; 102) définissant un contour fermé et étant mobile entre une position d'ouverture et une position d'obturation d'au moins une canalisation (5) d'alimentation en eau de la roue à aubes (R),
le dispositif (1 ; 101) comprenant au moins quatre vérins (11, 12, 21, 22, 31, 32 ; 111, 112, 121, 122, 131, 132) à double action hydraulique, chaque vérin (11, 12, 21, 22, 31, 32 ; 111, 112, 121, 122, 131, 132) comportant :

    - une tige (11.3, 12.3),
    - un piston (11.4, 12.4 ; 111.4, 112.4),
    - une première chambre (11.1, 12.1 ; 111.1, 112.1) et
    - une deuxième chambre (11.2, 12.2 ; 111.2, 112.2),

la première chambre (11.1, 12.1 ; 111.1, 112.1) et la deuxième chambre (11.2, 12.2 ; 111.2, 112.2) étant adaptées pour recevoir un fluide d'actionnement, le piston (11.4, 12.4 ; 111.4, 112.4) étant lié à la tige (11.3, 12.3) de façon à séparer la première chambre (11.1, 12.1 ; 111.1, 112.1) de la deuxième chambre (11.2, 12.2 ; 111.2, 112.2), la première chambre (11.1, 12.1 ; 111.1, 112.1) étant située du côté de la tige (11.3, 12.3) par rapport au piston (11.4, 12.4 ; 111.4, 112.4) et la deuxième chambre (11.2, 12.2 ; 111.2, 112.2) étant située du côté opposé à la tige (11.3, 12.3) par rapport au piston (11.4, 12.4 ; 111.4, 112.4), les tiges (11.3, 12.3) étant adaptées pour être liées à la vanne-fourreau (2 ; 102) en des emplacements (P11, P12, P21, P22, P31, P32) situés sur un périmètre (C2) adapté pour coïncider avec le contour de la vanne-fourreau (2 ; 102),

le dispositif (1 ; 101) étant **caractérisé en ce qu'**il comprend en outre au moins deux organes hydrauliques de synchronisation (10.1, 20.1, 30.1 ; 110.1, 120.1, 130.1) des distances parcourues par des pistons (11.4, 12.4 ; 111.4, 112.4) suivant la direction principale (Y) de déplacement de la vanne-fourreau (2 ; 102),

les organes hydrauliques de synchronisation (10.1, 20.1, 30.1 ; 110.1, 120.1, 130.1) étant reliés aux vérins (11, 12, 21, 22, 31, 32 ; 111, 112, 121, 122, 131, 132) de façon à former au moins deux groupes (10, 20, 30 ; 110, 120, 130) distincts de vérins, chaque groupe (10, 20, 30 ; 110, 120, 130) englobant au moins deux vérins (11-12, 21-22, 31-32 ; 111-112, 121-122, 131-132) reliés par au moins un organe hydraulique de synchronisation (10.1, 20.1, 30.1 ; 110.1, 120.1, 130.1), deux vérins (11, 21, 31, 12, 22, 32 ; 111, 112, 121, 122, 131, 132) appartenant à deux groupes (10, 20, 30 ; 110, 120, 130) distincts n'étant pas reliés par un organe hydraulique de synchronisation (10.1, 20.1, 30.1 ; 110.1, 120.1, 130.1).

**2.** Dispositif (1 ; 101) selon la revendication 1, **caractérisé en ce que** les emplacements (P11, P12, P21, P22, P31, P32) sont répartis sur le périmètre (C2) de sorte que la raideur de la vanne-fourreau (2) contribue à synchroniser les distances que parcourent des pistons (11.4, 21.4 ; 111.4, 112.4) appartenant à des groupes (10, 20, 30 ; 110, 120, 130) distincts, suivant la direction principale (Y) de déplacement de la vanne-fourreau (2 ; 102).

**3.** Dispositif (1) selon l'une des revendications 1 ou 2, **caractérisé en ce qu'**au moins un organe hydraulique de synchronisation comprend un conduit (10.1, 20.1, 30.1) agencé pour connecter en série au moins deux vérins (11-12, 21-22, 31-32) appartenant à un même groupe (10, 20, 30), à savoir un premier vérin et un deuxième vérin, ledit organe hydraulique de synchronisation (10.1, 20.1, 30.1) étant adapté pour l'écoulement de fluide d'actionnement de la première chambre (11.1) d'un premier vérin (11, 21, 31) vers la deuxième chambre (12.2) d'un deuxième vérin (12, 22, 32), le deuxième vérin (12, 22, 32) étant consécutif au premier vérin (11, 21, 31) dans leur groupe (10, 20, 30), la superficie (S11.41) de la face (11.41) du piston (11.4) délimitant la première chambre (11.1) du premier vérin (11, 21, 31) étant approximativement égale à la superficie (S12.42) de la face (12.42) du piston (12.4) délimitant la deuxième chambre (12.2) du deuxième vérin (12, 22, 32).

**4.** Dispositif (1 ; 101) selon l'une des revendications précédentes, **caractérisé en ce que** le nombre de vérins (11, 12, 21, 22, 31, 32 ; 111, 112, 121, 122, 131, 132) est compris entre 5 et 30.

**5.** Dispositif (1 ; 101) selon l'une des revendications précédentes, **caractérisé en ce que** les groupes (10, 20, 30 ; 110, 120, 130) englobent le même nombre de vérins (11, 12, 21, 22, 31, 32 ; 111, 112, 121, 122, 131, 132).

**6.** Dispositif (1 ; 101) selon les revendications 4 et 5, **caractérisé en ce qu'**il comporte au moins trois groupes (10, 20, 30 ; 110, 120, 130) de vérins et **en ce que** chaque groupe (10, 20, 30 ; 110, 120, 130) englobe deux vérins (11-12, 21-22, 31-32 ; 111-112, 121-122, 131-132).

**7.** Dispositif (1) selon l'une des revendications précédentes, **caractérisé en ce que** deux emplacements (P11, P21) consécutifs sur ledit périmètre (C2) correspondent à des vérins (11, 21 ; 111, 121) appartenant à deux groupes (10, 20, 30 ; 110, 120, 130) distincts.

**8.** Dispositif (1 ; 101) selon les revendications 6 et 7, **caractérisé en ce que** les emplacements (P11, P12, P21, P22, P31, P32) sont uniformément répartis sur ledit périmètre (C2), **en ce que** ledit périmètre (C2) est en forme de cercle et **en ce que** les emplacements (P11, P12, P21, P22, P31, P32) correspondant aux deux vérins (11, 12, 21, 22, 31, 32 ; 111, 112, 121, 122, 131, 132) d'un groupe (10, 20, 30 ; 110, 120, 130) sont diamétralement opposés.

**9.** Dispositif (1 ; 101) selon l'une des revendications précédentes, **caractérisé en ce que** la première chambre (11.1, 12.1 ; 111.1, 112.1) et la deuxième chambre (11.2, 12.2 ; 111.2, 112.2) de chaque vérin (11, 12, 21, 22, 31, 32 ; 111, 112, 121, 122, 131, 132) sont globalement en forme de cylindres à bases circulaires.

**10.** Dispositif (1) selon les revendications 3 et 9, **caractérisé en ce que**, pour un premier vérin (11) et un deuxième vérin (12) appartenant à un même groupe (10, 20, 30), la différence entre le carré du diamètre interne (D11) du premier vérin (11) et le carré du diamètre interne (D12) du deuxième vérin (12) vaut le carré du diamètre (D11.3) de la tige (11.3) du premier vérin (11).

**11.** Dispositif (1 ; 101) selon l'une des revendications précédentes, **caractérisé en ce qu'**il comporte en outre une unité de pilotage (4 ; 104) et des moyens d'alimentation discrète et/ou d'évacuation discrète (74, 75, 76 ; 174, 175, 176) en fluide d'actionnement pour chaque vérin (11, 12, 21, 22, 31, 32 ; 111, 112, 121, 122, 131, 132), **en ce que** chaque vérin (11, 12, 21, 22, 31, 32 ; 111, 112, 121, 122, 131, 132) est équipé d'au moins un capteur (11.5, 12.5) adapté pour émettre des signaux représentatifs de la position du piston (11.4, 12.4 ; 111.4, 112.4) correspondant suivant la direction d'actionnement du vérin (Y), l'unité de pilotage (4 ; 104) étant agencée pour collecter lesdits signaux et adaptée pour piloter les moyens d'alimentation discrète et/ou d'évacuation discrète (74, 75, 76 ; 174, 175, 176) en tenant compte des écarts de positions, suivant la direction principale (Y) de déplacement de la vanne-fourreau (2 ; 102), entre des vérins (11, 12, 21, 22, 31, 32; 111, 112, 121, 122, 131, 132) appartenant à un même groupe (10, 20, 30 ; 110, 120, 130).

12. Dispositif (1 ; 101) selon la revendication 11, **caractérisé en ce qu'**il comporte en outre des moyens d'alimentation continue et/ou d'évacuation continue (71, 72, 73 ; 171) en fluide d'actionnement des vérins (11, 12, 21, 22, 31, 32 ; 111, 112, 121, 122, 131, 132) et **en ce que** l'unité de pilotage (4 ; 104) est adaptée pour piloter les moyens d'alimentation continue et/ou d'évacuation continue (71, 72, 73 ; 171) en tenant compte des écarts de position entre des vérins (11, 12, 21, 22, 31, 32 ; 111, 112, 121, 122, 131, 132) appartenant à des groupes distincts (10, 20, 30 ; 110, 120, 130).

13. Machine hydraulique (M), de type turbine, pompe ou turbine-pompe, comportant une roue à aubes (R) et une vanne-fourreau (2 ; 102) mobile entre une position d'ouverture et une position d'obturation d'au moins une canalisation (5) d'alimentation en eau de la roue à aubes (R), la machine hydraulique (M) étant **caractérisée en ce qu'**elle comporte en outre un dispositif (1 ; 101) selon l'une des revendications précédentes.

**Patentansprüche**

1. Vorrichtung (1; 101) zur Steuerung der Bewegung eines Ringventils (2; 102) einer Hydraulikmaschine (M), umfassend ein Schaufelrad (R), wobei das Ringventil (2; 102) eine geschlossene Kontur definiert und zwischen einer Öffnungsposition und einer Verschlussposition mindestens eines Wasserversorgungskanals (5) des Schaufelrades (R) beweglich ist, wobei die Vorrichtung (1; 101) mindestens vier Zylinder (11, 12, 21, 22, 31, 32; 111, 112, 121, 122, 131, 132) mit hydraulischer Doppelwirkung umfasst, wobei jeder Zylinder (11, 12, 21, 22, 31, 32; 111, 112, 121, 122, 131, 132) umfasst:

   - eine Stange (11.3, 12.3),
   - einen Kolben (11.4, 12.4; 111.4, 112.4),
   - eine erste Kammer (11.1, 12.1; 111.1, 112.1) und
   - eine zweite Kammer (11.2, 12.2; 111.2, 112.2),
   wobei die erste Kammer (11.1, 12.1; 111.1, 112.1) und die zweite Kammer (11.2, 12.2; 111.2, 112.2) dazu vorgesehen sind, ein Betätigungsfluid aufzunehmen, wobei der Kolben (11.4, 12.4; 111.4, 112.4) mit der Stange (11.3, 12.3) derart verbunden ist, dass er die erste Kammer (11.1, 12.1; 111.1, 112.1) von der zweiten Kammer (11.2, 12.2; 111.2, 112.2) trennt, wobei die erste Kammer (11.1, 12.1; 111.1, 112.1) auf der Seite der Stange (11.3, 12.3) in Bezug zum Kolben (11.4, 12.4; 111.4, 112.4) und die zweite Kammer (11.2, 12.2; 111.2, 112.2) auf der gegenüberliegenden Seite der Stange (11.3, 12.3) in Bezug zum Kolben (11.4, 12.4; 111.4, 112.4) angeordnet ist, wobei die Stangen (11.3, 12.3) dazu vorgesehen sind, mit dem Ringventil (2; 102) an Stellen (P11, P12, P21, P22, P31, P32) verbunden zu werden, die sich auf einem Umfang (C2) befinden, der dazu vorgesehen ist, mit der Kontur des Ringventils (2; 102) zusammenzufallen, wobei die Vorrichtung (1; 101) **dadurch gekennzeichnet ist, dass** sie ferner mindestens zwei hydraulische Synchronisationselemente (10.1, 20.1, 30.1; 110.1, 120.1, 130.1) für die von den Kolben (11.4, 12.4; 111.4, 112.4) entlang der Hauptbewegungsrichtung (Y) des Ringventils (2; 102) durchlaufenden Distanzen umfasst, wobei die hydraulischen Synchronisationselemente (10.1, 20.1, 30.1; 110.1, 120.1, 130.1) mit den Zylindern (11, 12, 21, 22, 31, 32; 111, 112, 121, 122, 131, 132) verbunden sind, um mindestens zwei getrennte Gruppen (10, 20, 30; 110, 120, 130) von Zylindern zu bilden, wobei jede Gruppe (10, 20, 30; 110, 120, 130) mindestens zwei Zylinder (11-12, 21-22, 31-32; 111-112, 121-122, 131-132) einschließt, die durch mindestens ein Synchronisationselement (10.1, 20.1, 30.1; 110.1, 120.1, 130.1) verbunden sind, wobei zwei Zylinder (11, 21, 31, 12, 22, 32; 111, 112, 121, 122, 131, 132), die zwei unterschiedlichen Gruppen (10, 20, 30; 110, 120, 130) angehören, nicht durch ein hydraulisches Synchronisationselement (10.1, 20.1, 30.1; 110.1, 120.1, 130.1) verbunden sind.

2. Vorrichtung (1; 101) nach Anspruch 1, **dadurch gekennzeichnet, dass** die Stellen (P11, P12, P21, P22, P31, P32) auf dem Umfang (C2) derart verteilt sind, dass die Steifigkeit des Ringventils (2) dazu beiträgt, die Distanzen, die die Kolben (11.4, 21.4; 111.4, 112.4), die unterschiedlichen Gruppen (10, 20, 30; 110, 120, 130) angehören, in die Hauptbewegungsrichtung (Y) des Ringventils (2; 102) durchlaufen, zu synchronisieren.

3. Vorrichtung (1) nach einem der Ansprüche 1 oder 2, **dadurch gekennzeichnet, dass** mindestens ein hydraulisches Synchronisationselement eine Leitung (10.1, 20.1, 30.1) umfasst, die derart angeordnet ist, dass sie in Serie mindestens zwei Zylinder (11-12, 21-22, 31-32), die einer selben Gruppe (10, 20, 30) angehören, nämlich einen ersten Zylinder und einen zweiten Zylinder, verbindet, wobei das hydraulische Synchronisationselement (10.1, 20.1, 30.1) für das Abfließen von Betätigungsfluid aus der ersten Kammer (11.1) eines ersten Zylinders (11, 21, 31) zu der zweiten Kammer (12.2) eines zweiten Zylinders (12, 22, 32) vorgesehen ist, wobei der zweite Zylinder (12, 22, 32) auf den ersten Zylinder (11, 21, 31) in ihrer Gruppe (10, 20, 30) folgt, wobei die Oberfläche (S11.41) der Seite (11.41) des Kolbens (11.4), die die erste Kammer (11.1) des ersten Zylinders (11, 21, 31) begrenzt, annähernd gleich der Oberfläche (S12.42) der Seite (12.42) des Kolbens (12.4) ist, die die zweite Kammer (12.2) des zweiten Zylinders (12, 22, 32) begrenzt.

4. Vorrichtung (1; 101) nach einem der vorhergehenden Ansprüche, **dadurch gekennzeichnet, dass** die Anzahl von Zylindern (11, 12, 21, 22, 31, 32; 111, 112, 121, 122, 131, 132) zwischen 5 und 30 beträgt.

5. Vorrichtung (1; 101) nach einem der vorhergehenden Ansprüche, **dadurch gekennzeichnet, dass** die Gruppen (10, 20, 30; 110, 120, 130) dieselbe Anzahl von Zylindern (11, 12, 21, 22, 31, 32; 111, 112, 121, 122, 131, 132) umfassen.

6. Vorrichtung (1; 101) nach den Ansprüchen 4 und 5, **dadurch gekennzeichnet, dass** sie mindestens drei Gruppen (10, 20, 30; 110, 120, 130) von Zylindern umfasst, und dass jede Gruppe (10, 20, 30; 110, 120, 130) zwei Zylinder (11-12, 21-22, 31-32; 111-112, 121-122, 131-132) umfasst.

7. Vorrichtung (1) nach einem der vorhergehenden Ansprüche, **dadurch gekennzeichnet, dass** zwei aufeinanderfolgende Stellen (P11, P21) auf dem Umfang (C2) Zylindern (11, 21; 111, 121) entsprechen, die zwei unterschiedlichen Gruppen (10, 20, 30; 110, 120, 130) angehören.

8. Vorrichtung (1; 101) nach den Ansprüchen 6 und 7, **dadurch gekennzeichnet, dass** die Stellen (P11, P12, P21, P22, P31, P32) einheitlich auf dem Umfang (C2) verteilt sind, dass der Umfang (C2) kreisförmig ist, und dass die Stellen (P11, P12, P21, P22, P31, P32), die den beiden Zylindern (11, 12, 21, 22, 31, 32; 111, 112, 121, 122, 131, 132) einer Gruppe (10, 20, 30; 110, 120, 130) entsprechen, diametral entgegengesetzt sind.

9. Vorrichtung (1; 101) nach einem der vorhergehenden Ansprüche, **dadurch gekennzeichnet, dass** die erste Kammer (11.1, 12.1; 111.1, 112.1) und die zweite Kammer (11.2, 12.2; 111.2, 112.2) jedes Zylinders (11, 12, 21, 22, 31, 32; 111, 112, 121, 122, 131, 132) im Wesentlichen die Form von Zylindern mit kreisförmiger Basis haben.

10. Vorrichtung (1) nach den Ansprüchen 3 und 9, **dadurch gekennzeichnet, dass** für einen ersten Zylinder (11) und einen zweiten Zylinder (12), die einer selben Gruppe (10, 20, 30) angehören, der Unterschied zwischen dem Quadrat des Innendurchmessers (D11) des ersten Zylinders (11) und dem Quadrat des Innendurchmessers (D12) des zweiten Zylinders (12) gleich dem Quadrat des Durchmessers (D11.3) der Stange (11.3) des ersten Zylinders (1) ist.

11. Vorrichtung (1; 101) nach einem der vorhergehenden Ansprüche, **dadurch gekennzeichnet, dass** sie ferner eine Steuereinheit (4; 104) und Mittel zur diskreten Zuführung und/oder diskreten Ableitung (74, 75, 76; 174, 175, 176) eines Betätigungsfluids für jeden Zylinder (11, 12, 21, 22, 31, 32; 111, 112, 121, 122, 131, 132) umfasst, und dass jeder Zylinder (11, 12, 21, 22, 31, 32; 111, 112, 121, 122, 131, 132) mit mindestens einem Fühler (11.5, 12.5) versehen ist, der dazu vorgesehen ist, Signale zu entsenden, die für die Position des entsprechenden Kolbens (11.4, 12.4; 111.4, 112.4) entlang der Betätigungsrichtung des Zylinders (Y) repräsentativ sind, wobei die Steuereinheit (4; 104) derart angeordnet ist, dass sie die Signale sammelt und dazu geeignet ist, die Mittel zur diskreten Zuführung und/oder diskreten Ableitung (74, 75, 76; 174, 175, 176) unter Berücksichtigung der Positionsabweichungen entlang der Hauptverschieberichtung (Y) des Ringventils (2; 102) zwischen Zylindern (11, 12, 21, 22, 31, 32; 111, 112, 121, 122, 131, 132), die einer selben Gruppe (10, 20, 30; 110, 120, 130) angehören, zu steuern.

12. Vorrichtung (1; 101) nach Anspruch 11, **dadurch gekennzeichnet**, das sie ferner Mittel zur kontinuierlichen Zuführung und/oder kontinuierlichen Ableitung (71, 72, 73; 171) eines Betätigungsfluids der Zylinder (11, 12, 21, 22, 31, 32; 111, 112, 121, 122, 131, 132) umfasst, und dass die Steuereinheit (4; 104) derart angeordnet ist, dass sie die Mittel zur kontinuierlichen Zuführung und/oder kontinuierlichen Ableitung (71, 72, 73; 171) unter Berücksichtigung der Positionsabweichungen zwischen Zylindern (11, 12, 21, 22, 31, 32; 111, 112, 121, 122, 131, 132), die unterschiedlichen Gruppen (10, 20, 30; 110, 120, 130) angehören, steuern.

**13.** Hydraulikmaschine (M) vom Typ Turbine, Pumpe oder Turbinenpumpe, umfassend ein Schaufelrad (R) und ein Ringventil (2; 102), das zwischen einer Öffnungsposition und einer Verschlussposition mindestens eines Wasserversorgungskanals (5) des Schaufelrades (R) beweglich ist, wobei die Hydraulikmaschine (M) **dadurch gekennzeichnet ist, dass** sie ferner eine Vorrichtung (1; 101) nach einem der vorhergehenden Ansprüche umfasst.

**Claims**

**1.** Device (1; 101) for controlling the movement of a ring gate (2; 102) of a hydraulic machine (M) comprising a runner (R), the ring gate (2; 102) defining a closed contour and being able to move between a position of opening and a position of closing at least one line (5) for supplying the runner (R) with water,
the device (1; 101) comprising at least four dual-action hydraulic cylinders (11, 12, 21, 22, 31, 32; 111, 112, 121, 122, 131, 132), each cylinder (11, 12, 21, 22, 31, 32; 111, 112, 121, 122, 131, 132) comprising:

   - a rod (11.3, 12.3),
   - a piston (11.4, 12.4; 111.4, 112.4),
   - a first chamber (11.1, 12.1; 111.1, 112.1) and
   - a second chamber (11.2, 12.2; 111.2, 112.2),

the first chamber (11.1, 12.1; 111.1, 112.1) and the second chamber (11.2, 12.2; 111.2, 112.2) being adapted to receive an actuating fluid, the piston (11.4, 12.4; 111.4, 112.4) being connected to the rod (11.3, 12.3) so as to separate the first chamber (11.1, 12.1; 111.1, 112.1) from the second chamber (11.2, 12.2; 111.2, 112.2), the first chamber (11.1, 12.1; 111.1, 112.1) being situated on the rod (11.3, 12.3) side with respect to the piston (11.4, 12.4; 111.4, 112.4) and the second chamber (11.2, 12.2; 111.2, 112.2) being situated on the side opposite the rod (11.3, 12.3) with respect to the piston (11.4, 12.4; 111.4, 112.4), the rods (11.3, 12.3) being adapted to be connected to the ring gate (2; 102) at locations (P11, P12, P21, P22, P31, P32) located on a perimeter (C2) adapted to coincide with the contour of the ring gate (2; 102), the device (1; 101) being **characterized in that** it additionally comprises at least two hydraulic members (10.1, 20.1, 30.1; 110.1, 120.1, 130.1) for synchronizing the distances travelled by the pistons (11.4, 12.4; 111.4, 112.4) in the main direction (Y) of movement of the ring gate (2; 102), the hydraulic synchronization members (10.1, 20.1, 30.1; 110.1, 120.1, 130.1) being connected to the cylinders (11, 12, 21, 22, 31, 32; 111, 112, 121, 122, 131, 132) so as to form at least two separate groups (10, 20, 30; 110, 120, 130) of cylinders, each group (10, 20, 30; 110, 120, 130) encompassing at least two cylinders (11-12, 21-22, 31-32; 111-112, 121-122, 131-132) connected by at least one hydraulic synchronization member (10.1, 20.1, 30.1; 110.1, 120.1, 130.1), two cylinders (11, 21, 31, 12, 22, 32; 111, 112, 121, 122, 131, 132) belonging to two separate groups (10, 20, 30; 110, 120, 130) not being connected by a hydraulic synchronization member (10.1, 20.1, 30.1; 110.1, 120.1, 130.1).

**2.** Device (1; 101) according to Claim 1, **characterized in that** the locations (P11, P12, P21, P22, P31, P32) are distributed over the perimeter (C2) such that the stiffness of the ring gate (2) contributes to synchronizing the distances travelled by the pistons (11.4, 21.4; 111.4, 112.4) belonging to separate groups (10, 20, 30; 110, 120, 130) in the main direction (Y) of movement of the ring gate (2; 102).

**3.** Device (1) according to either of Claims 1 and 2, **characterized in that** at least one hydraulic synchronization member comprises a duct (10.1, 20.1, 30.1) arranged to connect in series at least two cylinders (11-12, 21-22, 31-32) belonging to one and the same group (10, 20, 30), namely a first cylinder and a second cylinder, the said hydraulic synchronization member (10.1, 20.1, 30.1) being adapted for the flow of actuating fluid from the first chamber (11.1) of a first cylinder (11, 21, 31) towards the second chamber (12.2) of a second cylinder (12, 22, 32), the second cylinder (12, 22, 32) being consecutive to the first cylinder (11, 21, 31) in their group (10, 20, 30), the area (S11.41) of the face (11.41) of the piston (11.4) delimiting the first chamber (11.1) of the first cylinder (11, 21, 31) being approximately equal to the area (S12.42) of the face (12.42) of the piston (12.4) delimiting the second chamber (12.2) of the second cylinder (12, 22, 32).

**4.** Device (1; 101) according to one of the preceding claims, **characterized in that** the number of cylinders (11, 12, 21, 22, 31, 32; 111, 112, 121, 122, 131, 132) is between 5 and 30.

5. Device (1; 101) according to one of the preceding claims, **characterized in that** the groups (10, 20, 30; 110, 120, 130) encompass the same number of cylinders (11, 12, 21, 22, 31, 32; 111, 112, 121, 122, 131, 132).

6. Device (1; 101) according to Claims 4 and 5, **characterized in that** it comprises at least three groups (10, 20, 30; 110, 120, 130) of cylinders and **in that** each group (10, 20, 30; 110, 120, 130) encompasses two cylinders (11-12, 21-22, 31-32; 111-112, 121-122, 131-132).

7. Device (1) according to one of the preceding claims, **characterized in that** two consecutive locations (P11, P21) on the said perimeter (C2) correspond to cylinders (11, 21; 111, 121) belonging to two separate groups (10, 20, 30; 110, 120, 130).

8. Device (1; 101) according to Claims 6 and 7, **characterized in that** the locations (P11, P12, P21, P22, P31, P32) are uniformly distributed over the said perimeter (C2), **in that** the said perimeter (C2) is in the shape of a circle, and **in that** the locations (P11, P12, P21, P22, P31, P32) corresponding to the two cylinders (11, 12, 21, 22, 31, 32; 111, 112, 121, 122, 131, 132) of a group (10, 20, 30; 110, 120, 130) are diametrically opposite.

9. Device (1; 101) according to one of the preceding claims, **characterized in that** the first chamber (11.1, 12.1; 111.1, 112.1) and the second chamber (11.2, 12.2; 111.2, 112.2) of each cylinder (11, 12, 21, 22, 31, 32; 111, 112, 121, 122, 131, 132) are generally in the shape of cylinders with circular bases.

10. Device (1) according to Claims 3 and 9, **characterized in that**, for a first cylinder (11) and a second cylinder (12) belonging to one and the same group (10, 20, 30), the difference between the square of the inside diameter (D11) of the first cylinder (11) and the square of the inside diameter (D12) of the second cylinder (12) is equal to the square of the diameter (D11.3) of the rod (11.3) of the first cylinder (11).

11. Device (1; 101) according to one of the preceding claims, **characterized in that** it additionally comprises a control unit (4; 104) and discrete actuating fluid supply and/or discrete actuating fluid discharge means (74, 75, 76; 174, 175, 176) for each cylinder (11, 12, 21, 22, 31, 32; 111, 112, 121, 122, 131, 132), and **in that** each cylinder (11, 12, 21, 22, 31, 32; 111, 112, 121, 122, 131, 132) is equipped with at least one sensor (11.5, 12.5) adapted to emit signals representative of the position of the corresponding piston (11.4, 12.4; 111.4, 112.4) in the direction (Y) of actuation of the cylinder, the control unit (4; 104) being arranged to collect the said signals and adapted to control the discrete supply and/or discrete discharge means (74, 75, 76; 174, 175, 176) while taking into account position deviations, in the main direction (Y) of movement of the ring gate (2; 102), between cylinders (11, 12, 21, 22, 31, 32; 111, 112, 121, 122, 131, 132) belonging to one and the same group (10, 20, 30; 110, 120, 130).

12. Device (1; 101) according to Claim 11, **characterized in that** it additionally comprises continuous actuating fluid supply and/or continuous actuating fluid discharge means (71, 72, 73; 171) for the cylinders (11, 12, 21, 22, 31, 32; 111, 112, 121, 122, 131, 132), and **in that** the control unit (4; 104) is adapted to control the continuous supply and/or continuous discharge means (71, 72, 73; 171) while taking into account position deviations between cylinders (11, 12, 21, 22, 31, 32; 111, 112, 121, 122, 131, 132) belonging to separate groups (10, 20, 30; 110, 120, 130).

13. Hydraulic machine (M), of the turbine, pump or turbine-pump type, comprising a runner (R) and a ring gate (2; 102) which is able to move between a position of opening and a position of closing at least one line (5) for supplying the runner (R) with water, the hydraulic machine (M) being **characterized in that** it additionally comprises a device (1; 101) according to one of the preceding claims.

Fig.1

EP 2 526 286 B1

M

11

2

~6~    ~9~

~5~

Y2-Y'2

R

*Fig.2*

11

12

11.5    11.2

12.5    12.2

IV

D11

D12

~11.4~

~12.4~

IV

11.1    11.41

12.42

11.3    10.1

12.1

12.3

*Fig.3*

D11.3

D11.3    S11.3

D12    S12.42

S11.41

D11

*Fig.4*

Fig.5

EP 2 526 286 B1

Fig.6

Fig.7

*Fig.8*

**EP 2 526 286 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9943954 A